# EUROPEAN PATENT SPECIFICATION

(11) **EP 3 386 599 B1**
(45) Date of publication and mention of the grant of the patent: **21.07.2021**
(21) Application number: 16891887.8
(22) Date of filing: 09.12.2016
(51) Int. Cl.: A62D 3/30, B01J 23/00, C01G 39/02, C01G 41/02, C08G 83/00

(54) **POLYMERS OF POLYOXOMETALATES AND HYDROXY-TERMINATED MONOMER UNITS AND USES IN DEGRADING NOXIOUS AGENTS**
POLYMERE VON POLYOXOMETALLATEN UND HYDROXY-TERMINIERTEN MONOMEREINHEITEN UND VERWENDUNGEN BEIM ABBAU VON SCHÄDLICHEN WIRKSTOFFEN
POLYMÈRES À BASE DE MOTIFS MONOMÈRES POLYOXOMÉTALATES ET DE MOTIFS À TERMINAISONS HYDROXY ET LEURS UTILISATIONS DANS LA DÉGRADATION DES AGENTS NOCIFS

(30) Priority: 10.12.2015 US 201562265746 P
(43) Date of publication of application: 17.10.2018
(73) Proprietor: Emory University, Atlanta, Georgia 30322 (US)
(72) Inventor: HILL, Craig, Atlanta, Georgia 30322 (US); SULLIVAN, Kevin, Atlanta, Georgia 30322 (US)
(74) Representative: Lee, Nicholas John
(86) International application number: PCT/US2016/065776
(87) International publication number: WO 2017/146801

(56) References cited:
- WO-A2-01/34279
- WO-A2-2015/040033
- CN-A- 103 923 282
- US-A- 5 585 510
- US-B1- 6 713 076
- US-B2- 7 655 594
- ZHAOHUI HUO ET AL: "Synthesis and characterization of Lindqvist-type polyoxometalate-porphyrin copolymers", ELECTROCHIMICA ACTA., vol. 179, 1 October 2015 (2015-10-01), pages 326-335, XP055566700, GB ISSN: 0013-4686, DOI: 10.1016/j.electacta.2015.03.178
- UNSONG TONG ET AL: "Reversible Light-Driven Polymerization of Polyoxometalate Tethered with Coumarin Molecules", CHEMISTRY - A EUROPEAN JOURNAL, vol. 20, no. 6, 3 February 2014 (2014-02-03), pages 1500-1504, XP055566740, DE ISSN: 0947-6539, DOI: 10.1002/chem.201303933
- CHULLIKKATTIL P. PRADEEP ET AL: "Design and Synthesis of "Dumb-bell" and "Triangular" Inorganic-Organic Hybrid Nanopolyoxometalate Clusters and Their Characterisation through ESI-MS Analyses", CHEMISTRY - A EUROPEAN JOURNAL, vol. 17, no. 27, 18 May 2011 (2011-05-18), pages 7472-7479, XP055566766, DE ISSN: 0947-6539, DOI: 10.1002/chem.201100257
- Huadong Zeng ET AL: "Poly(polyoxometalate) Dendrimers: Molecular Prototypes of New Catalytic Materials**", Chem, 1 January 2000 (2000-01-01), XP055566800, Retrieved from the Internet: URL:https://onlinelibrary.wiley.com/doi/ab s/10.1002/%28SICI%291521-3757%2820000515%2 9112%3A10%3C1841%3A%3AAID-ANGE1841%3E3.0.C O%3B2-F
- JOEL R. MORGAN ET AL: "Synthesis of carbohydrate-linked poly(polyoxometalate) poly(amido)amine dendrimers", JOURNAL OF POLYMER SCIENCE, PART A: POLYMER CHEMISTRY, vol. 43, no. 14, 15 July 2005 (2005-07-15) , pages 3059-3066, XP055567156, US ISSN: 0887-624X, DOI: 10.1002/pola.20799

## Description

### BACKGROUND

Chemical warfare agents are toxic chemicals that have either lethal or incapacitating effects on humans. Organophosphorus (OP) nerve agents are a class of warfare agents with high toxicity and potential for large-scale release. Traditional materials for decomposing OP nerve agents such as activated carbon are effective for sequestration but are not ideal for decontamination as incorporation of catalytically active functional groups into these materials is challenging. Thus, there is a need to identify improved compositions and methods for degradation or decontamination of OP nerve agents.

Certain polyoxometalates (POMs) have been reported for the degradation of noxious agents. Mondloch et al. report destruction of chemical warfare agents using metal-organic frameworks. Nature Materials, 14, 512-516 (2015). DeCoste et al. report metal-organic frameworks for air purification of toxic chemicals. Chemical Reviews 114, 5695-5727 (2014). Kinnan et al. report nerve agent degradation with polyoxoniobates. European Journal of Inorganic Chemistry 2014, 2361-2367 (2014). Guo et al. report decontamination of chemical warfare agents by heteropolyniobates. Angew Chem Int Ed Engl., 2016, 55(26):7403-7.

Carraro et al. report hybrid materials based on embedding transition metal oxoclusters or polyoxometalates into polymers. Materials, 2014, 7, 3956-3989. Bromberg et al. report gels in hydrolytic degradation of chemical warfare agents. ACS Appl. Mater. Interfaces, 2015, 7 (39):22001-22011.

The article by Zhaohui Huo et al., "Synthesis and characterization of Lindqvist-type polyoxometalate-porphyrin copolymers", ELECTROCHIMICA ACTA,vol. 179, 2015, pages 326-335, describes hybrid polyoxometalate-porphyrin copolymeric films obtained by the electrooxidation of 5, 15-ditolyl porphyrin and zinc-β-octaethylporphyrin in the presence of the Lindqvist-type polyoxovanadates having formula (NBu₄)₂[V₆O₁₃{(OCH₂)₃CNHCO(4-C₅H₄N)}₂].

The article by Unsong Tong et al., "Reversible Light-Driven Polymerization of Polyoxometalate Tethered with Coumarin Molecules", Chemistry - A European Journal, vol. 20, no. 6, 2014, pages 1500-1504, describes a photosensitive polyoxometalate (POM) organic-inorganic hybrid compound prepared by covalently tethering coumarin moieties onto a Mn-Anderson cluster.

The article by Chullikkattil P. Pradeep et al., "Design and Synthesis of "Dumb-bell" and "Triangular" Inorganic-Organic Hybrid Nanopolyoxometalate Clusters and their Characterisation through ESI-MS Analyses", Chemistry - A European Journal, vol. 17, no. 27, 2011, pages 7472-7479, describes a series of tris(hydroxymethyl)aminomethane (TRIS)-based, linear (bis(TRIS)) and triangular (tris-(TRIS)) ligands covalently attached to the Wells-Dawson type cluster [P₂V₃W₁₅O₆₂]⁹⁻ to generate a series of nanometer-sized inorganic-organic hybrid polyoxometalate clusters.

Chinese Patent Document CN 103 923 282 A discloses multipolymer comprising polyoxometalate units and trihydroxymethylaminomethane units, wherein the hydroxy groups coordinate with the oxygen atoms of the polyoxometalate.

The article by Huadong Zeng et al., "Poly(polyoxometalate) Dendrimers: Molecular Prototypes of New Catalytic Materials", Angew. Chem., 2000, pages 1842-1844, describes dendrimers wherein the hydroxy groups of the tris(hydroxymethyl) moieties decorating the dendrimers are covalently bonded to polyoxymetalate [P₂V₃W₁₅O₆₂] units.

The article by Joel R. Morgan, et al., "Synthesis of carbohydrate-linked poly(polyoxometalate) poly(amido)amine dendrimers", Journal of Polymer Science, Part A: Polymer Chemistry, vol. 43, no. 14, 2005, pages 3059-3066, describes mannose-functionalized and ethoxyethanol-functionalized poly(amido)amine dendrimers bound to multiple vanadate-substituted polyoxotungstate Wells-Dawson-type polyoxometalates (POMs), which are used in oxidation reactions.

WO01/34279 A2 discloses a polyoxometalate topical composition for removing a contaminant, which comprises a chemical warfare agent, from an environment, comprising a topical carrier and at least one polyoxometalate. The document discloses a polyoxometalate having formula: [VₖMoₘ WₙNbₒTaₚM_{q}XᵣOₛ]^{y-} [A], wherein M is not vanadium, molybdenum, tungsten, niobium, or tantalum and A is one or more different counterions.

### SUMMARY

This disclosure relates to polymers and polymer compositions having monomer units of polyoxometalates and monomer units comprising hydroxy-terminated molecules such as branched molecules and uses in degradation, decontamination, and deodorization.

In one aspect the present invention discloses a polyanionic polymer comprising tetrabutylammonium hexavanadate salt polymer [n-C₄H₉)4N]₂ₙ[(V₆O₁₃)ₙ[((OCH₂)₃CNHCO)₃C₆H₃]ₓ[((OCH₂)₃CNHCO)₂((HOCH₂)₃CNHCO)C₆H₃]_{y}] or lithium hexavanadate salt of the polymer, wherein tetrabutylammonium is exchanged with Li⁺

According to an embodiment of the present invention, the polymer is [n-C₄H₉)₄N]₂ₙ[(V₆O₁₃)ₙ[((OCH₂)₃CNHCO)₃C₆H₃]ₓ[((OCH₂)₃CNHCO)₂((HOCH₂)₃CNHCO)C₆H₃]_{y}, which according to a particular embodiment has an average molecular weight of 1586 ± 33 kDa, measured by static light scattering, indicating that the average polymer is comprised of roughly 1000 monomer units.

The present invention discloses also a composition comprising a polyanionic polymer comprising the tetrabutylammonium hexavanadate salt polymer [n-C₄H₉)₄N]₂ₙ[(V₆O₁₃)ₙ[((OCH₂)₃CNHCO)₃C₆H₃]ₓ[((OCH₂)₃CNHCO)₂((HOCH₂)₃CNHCO)C₆H₃]_{y}].

According to a particular embodiment of the present invention the composition further comprises a polar aprotic solvent and/or water.

In another aspect the present invention discloses an article comprising
a solid substrate and a composition comprising a polyanionic polymer comprising the tetrabutylammonium hexavanadate salt polymer [n-C₄H₉)₄N]₂ₙ[(V₆O₁₃)ₙ[((OCH₂)₃CNHCO)₃C₆H₃]ₓ[((OCH₂)₃CNHCO)₂((HOCH₂)₃CNHCO)C₆H₃]_{y}].

In a particular embodiment the solid substrate is a piece of clothing, fabric, string, matrix, collagen, leather, paper, polymer, plastic, glass, wood, metal surface, cement, rock, or solid aggregate of minerals or mineraloids.

In another aspect the present invention discloses a method of oxidizing an agent
comprising a thiol group, comprising exposing the composition comprising a polyanionic polymer comprising the tetrabutylammonium hexavanadate salt polymer [n-C₄H₉)₄N]₂ₙ[(V₆O₁₃)ₙ[((OCH₂)₃CNHCO)₃C₆H₃]ₓ[((OCH₂)₃CNHCO)₂((HOCH₂)₃CNHCO)C₆H₃]_{y}] to the agent such that the agent is oxidized by the metal complexes.

In further aspect the present invention discloses a method of hydrolysing an agent
comprising a phosphate ester group, comprising exposing the composition comprising a polyanionic polymer comprising the tetrabutylammonium hexavanadate salt polymer [n-C₄H₉)₄N]₂ₙ[(V₆O₁₃)ₙ[((OCH₂)₃CNHCO)₃C₆H₃]ₓ[((OCH₂)₃CNHCO)₂((HOCH₂)₃CNHCO)C₆H₃]_{y}] to the agent such that the agent is oxidized by the metal complexes.

### BRIEF DESCRIPTION OF THE DRAWINGS

Figure 1A illustrates representative structural unit of Q-BTAV₆ and resulting gel after addition of DMF. The spheres represent VV and O²⁻.
Figure 1B illustrates CP-MAS ¹³C NMR of Q-BTAV₆. Residual DMF peak (†) and tetrabutylammonium peaks (*) are indicated.

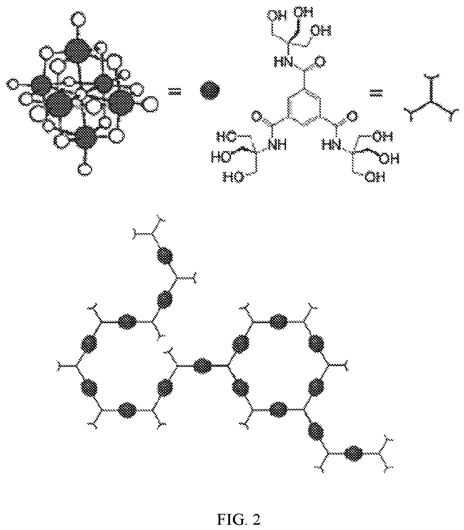

Figure 2 illustrates the polymer Q-BTAV₆. Solid spheres in the polymer network indicate hexavanadate [VV₆O₁₃(OR)₆)]²⁻ (R = trisBTA) linkers) clusters. Each cluster is associated with two tetrabutylammonium cations, which are omitted for clarity.
Figure 3 illustrates and shows data on the hydrolysis of diethyl cyanophosphonate catalyzed by Q-BTAV₆ in DMF. Q-BTAV₆ (5.7 mg; 3.6 µmol based on number of hexavanadate units) and DECP (66 µmol) were added to DMF, and 900 µmol water was added to initiate the hydrolysis. Reactions were monitored by ³¹P NMR. The control reaction was run using the same conditions as the catalyzed reaction but with the omission of Q-BTAV₆.
Figure 4 illustrates and shows data on the oxidation of propane thiol to dipropyl disulfide catalyzed by Q-BTAV₆. Reaction progress is measured by GC analysis. 3.0 mL wet DMF, 220 mM PrSH, 120 mM 1,3-dichlorobenzene as an internal standard, 7.6 mg Q-BTAV6, 100% O₂. The mole ratio of reactant to product is 127. Control reaction was run under identical conditions but with the omission of Q-BTAV₆. As reaction proceeds, a color change is observed from orange-yellow to dark green as the hexavanadate units are reduced.

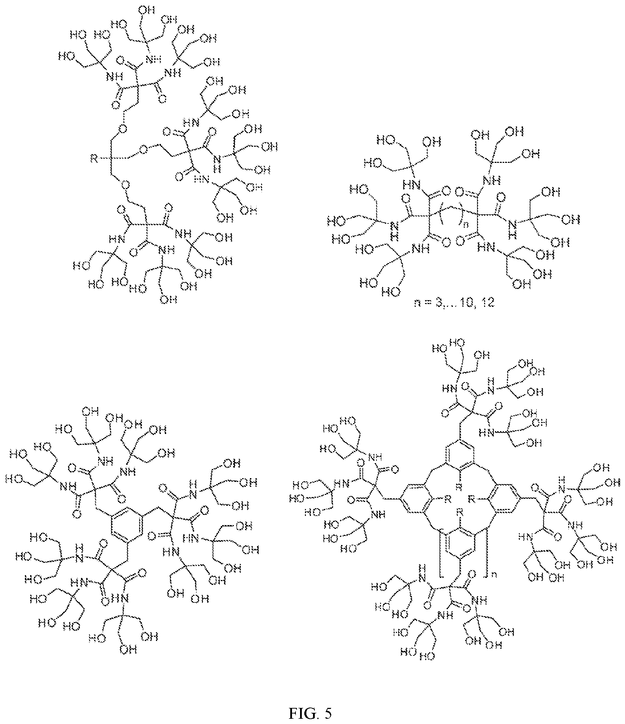

Figure 5 illustrates hydroxy-terminal dendrimers. See Newkome & Shreiner, Dendrimers Derived from 1 [to] 3 Branching Motifs, Chem. Rev. 2010, 110, 6338-6442.

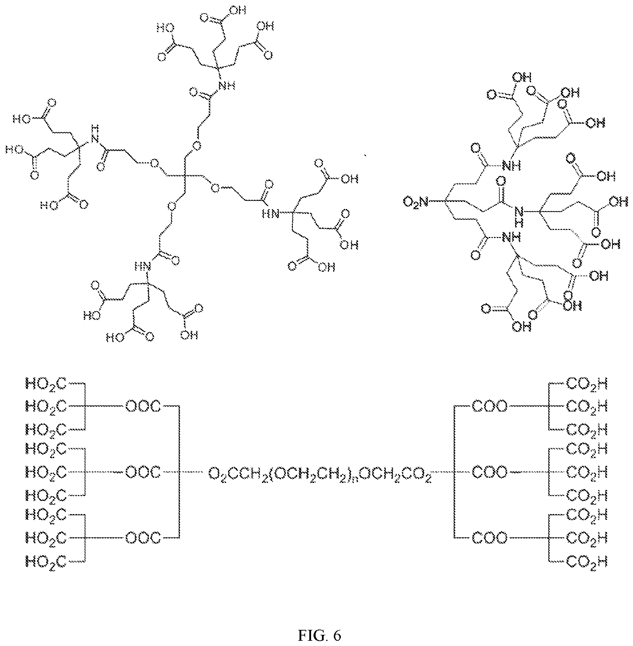

Figure 6 illustrates carboxyl-terminal dendrimers. See Newkome & Shreiner, Dendrimers Derived from 1 [to] 3 Branching Motifs, Chem. Rev. 2010, 110, 6338-6442.

### DETAILED DISCUSSION

Before the present disclosure is described in greater detail, it is to be understood that this disclosure is not limited to particular embodiments described, and as such may, of course, vary. It is also to be understood that the terminology used herein is for the purpose of describing particular embodiments only, and is not intended to be limiting, since the scope of the present disclosure will be limited only by the appended claims.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, the preferred methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided could be different from the actual publication dates that may need to be independently confirmed.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method can be carried out in the order of events recited or in any other order that is logically possible.

Embodiments of the present disclosure will employ, unless otherwise indicated, techniques of medicine, organic chemistry, biochemistry, molecular biology, pharmacology, and the like, which are within the skill of the art. Such techniques are explained fully in the literature.

It must be noted that, as used in the specification and the appended claims, the singular forms "a," "an," and "the" include plural referents unless the context clearly dictates otherwise. In this specification and in the claims that follow, reference will be made to a number of terms that shall be defined to have the following meanings unless a contrary intention is apparent.

As used in this disclosure and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") have the meaning ascribed to them in U.S. Patent law in that they are inclusive or open-ended and do not exclude additional, unrecited elements or method steps. "Consisting essentially of" or "consists essentially" or the like, when applied to methods and compositions encompassed by the present disclosure refers to compositions like those disclosed herein that exclude certain prior art elements to provide an inventive feature of a claim, but which may contain additional composition components or method steps, etc., that do not materially affect the basic and novel characteristic(s) of the compositions or methods, compared to those of the corresponding compositions or methods disclosed herein.

As used herein, the term "polymer" refers to a macromolecular structure comprising repeating molecular arrangements referred to as "monomers" or "units." "Polymer" is intended to encompass polymers that contain more than one or more than two repeating molecular arrangement sometimes referred to as "co-polymers."

### Branched Molecules and Dendrimers

This disclosure relates to polymers and polymer compositions having monomer units comprising a hydroxy-terminated branched molecules, dendrimers, arborols, or combinations thereof. As used herein, the term "dendrimer" or "arborol" can be used interchangeably to refer to compounds with repeating molecular arrangements having branches, e.g., a carbon substituted with at least three substituents, which is typically the result of synthesis from a core molecule. The synthesis may be in two or more directions. The dendrimer product can result in 1 to 2 branching patterns or 1 to 3 branching patterns or 1 to 1 and 2 branching patters as illustrated in Newkome & Shreiner, Dendrimers Derived from 1 [to] 3 Branching Motifs, Chem. Rev. 2010, 110, 6338-6442. See also Mekelburger et al., (1992), Dendrimers, Arborols, and Cascade Molecules: Breakthrough into Generations of New Materials. Angew. Chem. Int. Ed. Engl., 31: 1571-1576.

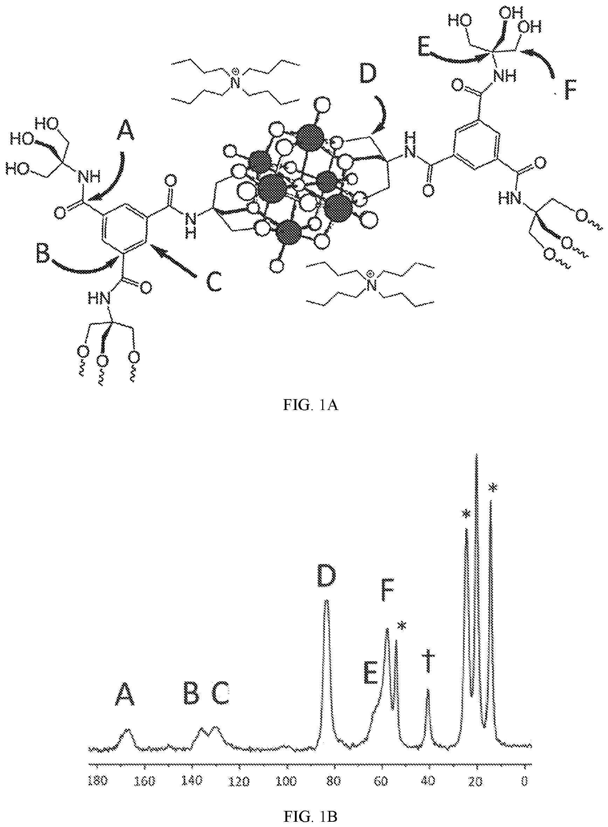

Hernandez et al. report synthesis of N-[tris(hydroxymethyl)methyl]benzene-carboxamides. J Org Chem, 64, 6905-6906 (1999). The branched molecule, N,N',N"-tris[tris(hydroxymethyl)methyl]-1,3,5-benzenetricarboxamide, as illustrated in figure 1, has repeating molecular arrangements represented by branched carbons with hydroxymethyl groups that emanate from a central phenyl ring; thus, N,N',N"-tris[tris(hydroxymethyl)methyl]-1,3,5-benzenetricarboxamide is a dendrimer. In certain embodiments, the hydroxy-terminated dendrimer comprises terminal 1,1-tris(hydroxymethyl)methyl or 1,1,1-tris(hydroxyalkyl)methyl groups.

The monomer units comprising a hydroxy-terminated dendrimer can have the following structure: 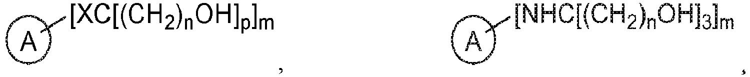 or 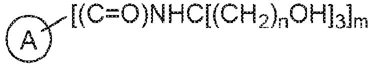 wherein, A is an aromatic or non-aromatic optionally heterocyclic ring, X is a linking group or [Y]_{q}, Y is individually and independently at each occurrence, CH₂, NH, O, S, -(C=O)-, m is 1, 2, 3, 4, 5, or 6, n is 1 to 22, and p is 2 or 3, q is 1, 2, 3, 4, 5, 6, 7, or 8. In particular n can be 1 or 2. In particular m can be 2, 3, or 4 or can be 3 or more. A can be phenyl.

As used herein, a "linking group" refers to any variety of molecular arrangements that can be used to bridge to molecular moieties together. An example formula may be -Rm- wherein R is selected individually and independently at each occurrence as: -CRmRm-, -CHRm-, -CH-, -C-, -CH2-, -C(OH)Rm, -C(OH)(OH)-, -C(OH)H, -C(Hal)Rm-, -C(Hal)(Hal)-, -C(Hal)H-, -C(N3)Rm-, -C(CN)Rm-, -C(CN)(CN)-, -C(CN)H-, -C(N3)(N3)-, -C(N3)H-, -O-, -S-, -N-, -NH-, -NRm-, -(C=O)-, -(C=NH)-, -(C=S)-, -(C=CH₂)-, which may contain single, double, or triple bonds individually and independently between the R groups. If an R is branched with an Rₘ it may be terminated with a group such as -CH₃, -H, -CH=CH₂, -CCH, -OH, -SH, -NH₂, -N₃, -CN, or -Hal, or two branched Rs may form a cyclic structure. It is contemplated that in certain instances, the total Rs or "m" may be less than 100 or 50 or 25 or 10. Examples of linking groups include bridging alkyl groups and alkoxyalkyl groups.

Herein are also disclosed compositions that have mixtures of hydroxy-terminated branched molecules such as mixtures of N,N',N"-tris[tris(hydroxymethyl)methyl]-1,3,5-benzenetricarboxamide and two-way branching molecules such as N,N'-bis[tris(hydroxymethyl)methyl]-5-tert-butyl-1,3- benzenedicarboxamide or oxybis[N-tris(hydroxymethyl)methyl]-4,4'-benzenedicarboxamide.

### Polyoxometalates

This disclosure relates to polymers and polymer compositions having units of polyoxometalates. As used herein, "polyoxometalate" refers to a polyatomic anion that contains a central metal atom/atoms and metal oxyanions linked together by shared oxygen atoms. The central metal atoms are typically Mo, W, V, Nb, or Ta. Polyoxometalate is intended to include isopolymetalates, composed of only one kind of metal, and heteropolymetalates, composed of a mixture of central metal(s) and The polyoxometalate according to the present invention is hexavanadate.

Herein it is disclosed also a polyoxometalate, which is a metal complex having the following formula:

MₚM'_{q}Oₓ(OH)ₙ

wherein
M is a metal atom typically a do center, such as tungsten (W), molybdenum (Mo), vanadium (V), niobium (Nb), tantalum (Ta), or combinations thereof;
M' is one or more redox active metals atoms selected from f-block elements, d-block elements, or combinations thereof;
p is an integer from 0 to 50;
q is an integer from 0 to 40; wherein the sum of p and q is two or more;
x is an integer from 0 to 400; and
n is an integer from 0 to 200.

In certain embodiments, wherein the sum of x and n is 4 or more.

The metal complex can be (Co₄), (Ni₄), (Ni₅), (W₁₀), (Mo₇), (V₁₀), (Ru₃), (Ru₄), (CoMo₆), (Co₂Mo₁₀) (SiW₉), (SiW₁₀), (Co₄SiW₉), (RuSiW₁₁), (GeW₉), (RuGeW₁₁), (PW₉), (AsW₉), (GeNb₁₂), or combinations thereof.

M' can be a transition metal selected from titanium, chromium, manganese, cobalt, iron, nickel, copper, rhodium, silver, iridium, palladium, platinum, mercury, ruthenium, and vanadium.

### Tunable gelating networks to entrap, detect, and catalytically destroy toxic agents

A polyanionic polymer according to the present invention is comprised of covalently functionalized hexavanadate clusters and hydrogen-bonding tricarboxamides (BTAs) with the quaternary ammonium cation (Q), tetrabutylammonium counterions, (Q-BTAV₆) and forms gels when exposed to select organic compounds, including the nerve agent simulant dimethyl methylphosphonate. Q-BTAV₆ catalyzes both hydrolysis of the organophosphorus nerve agent simulant diethylcyanophosphonate and oxidation of the representative odorant propanethiol. The oxidation reaction results in a color change in the polymer from red to green, providing built-in colorimetric detection. Facile cation exchange, Li⁺ for Q⁺, reveals the potential for modifying this type of polymer and tailoring its response to a variety of target compounds. Q-BTAV₆ is one representative of a class of materials that can simultaneously isolate, detect and destroy deleterious compounds.

Hybrid organic/inorganic networks were constructed based on polyoxometalates (POMs). The behavior of these hybrid polymers towards capturing and destroying harmful agents is reported. POMs are oligomeric aggregates of metal cations bridged by oxide anions. These hybrid organic/inorganic POMs allow for a broad array of functionalities to be designed and incorporated, facilitating their tailoring towards specific targets.

The catalytically active POM-based polymers form organogels when exposed to polar organic compounds, including OP agent analogues. This material has the ability to entrap select toxic compounds by gelation, catalyze their hydrolytic or air-based oxidative decontamination, and detect the redox reactions via rapid color change. Furthermore, it is robust and highly tunable to particular targets and applications.

The tetrabutylammonium hexavanadate salt of the polymer, [(n-C₄F[₉)₄N]₂ₙ[(V₆O₁₃)ₙ [((OCH₂)₃CNHCO)₃C₆H₃]ₓ[((OCH₂)₃(Q-BTAV₆), detects and catalyzes oxidation under mild conditions a common odorant, propanethiol (PrSH). Diethyl cyanophosphonate (DECP) is a mimic of tabun. Q-BTAV₆ is also capable of sequestration and hydrolytic decontamination of a G-series chemical warfare agent analogue, diethyl cyanophosphonate (DECP).

Synthesis of Q-BTAV₆ proceeds through an esterification reaction between C₆H₃(CONHC(CH₂OH)₃)₃ (trisBTA) and the Q⁺ salt of decavanadate, [Q]₃H₃V₁₀O₂₈. A single peak in the solution ⁵¹V NMR at -500 ppm confirms the presence of intact hexavanadate units containing symmetrical triester groups of the resulting Q-BTAV₆. Each vanadium atom in the esterified hexavanadate unit is symmetrically identical, so the single peak in ⁵¹V NMR spectrum supports the presence of discrete hexavanadate clusters. Each bis(triester-hexavanadate) bears a 2⁻ charge, compensated by two Q⁺ counter cations. A comparison between the V-O stretching frequencies in the infrared spectrum of the monomeric hexavanadate [(*n*-C₄H₉)₄N]₂[(V₆O₁₃) [((OCH₂)₃CNH₂]₂ (NH₂V₆) further confirms the presence of these units within the material. Solid-state CP-MAS ¹³C NMR reveals POM-bound trisBTA linkers in the product as indicated by a shift in the alcohol methylene peak from 58 ppm to 84 ppm (Figure 1A and B). Static light scattering measurements determined the average molecular weight of Q-BTAV₆ to be 1586 ± 33 kDa indicating the average polymer is comprised of roughly 1000 monomer units. Deconvolution of the ¹³C NMR peaks estimates a ratio of 4 hexavanadate-bound to 3 unbound methylene carbons, and elemental analysis of Q-BTAV₆ suggests a ratio of 1.3 hexavanadate units per trisBTA linker. Together, these data suggest that Q-BTAV₆ is an extensively cross-linked polymer. Z-contrast scanning transmission electron microscopy (STEM) and transmission electron microscopy (TEM) reveal the presence of cross-linked fibers in the material.

Q-BTAV₆ is designed to be a multifunctional material. One function of Q-BTAV₆ is its ability to sequester molecules of interest, forming gels in seconds when exposed to polar aprotic organic liquids. Addition of diethyl ether or toluene to the swollen gel results in release of the solvents from the gel network with accompanying contraction. The material retains its gelation capability even after multiple swelling/contraction cycles ATR FT-IR studies demonstrate that gel formation is mediated by hydrogen-bonging interactions between Q-BTAV₆ and the solvent. This hydrogen-bonding behavior is observed in trisBTA-based molecules as well as in other functionalized POMs, however this is the first example of a hexavanadate-based organogelator.

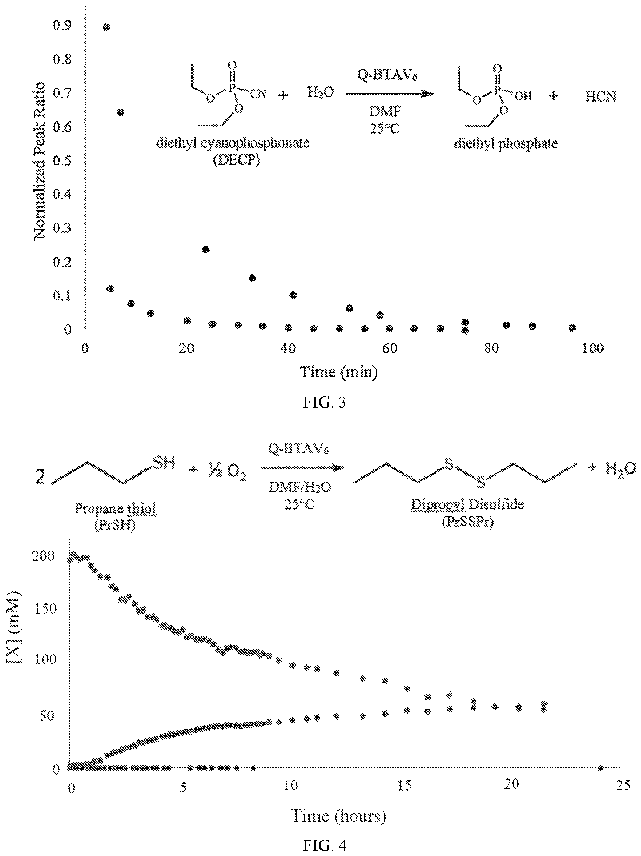

Considering high toxicity of G-agents, DMMP (dimethyl methylphosphonate) is used experimentally because of its similar chemical structure and much lower toxicity. The swelling behavior of Q-BTAV₆ was demonstrates when exposed to DMMP. The effect of Q-BTAV₆ on the hydrolysis of the nerve agent analogue DECP was examined. Using ³¹P NMR to monitor the reaction, experiments show that Q-BTAV₆ catalyzes the hydrolytic breakdown of DECP (Figure 3). Trials using the trisBTA linker show minor hydrolytic rate enhancements, whereas using an equimolar ratio of the monomer compound (based on V₆ units) resulted in an observation of a similar hydrolytic rate as that of Q-BTAV₆. This data suggests that the hexavanadate core is catalyzing the hydrolysis of the OP analogue, and that the incorporation of V₆ into the polymer retains the catalytic activity in the heterogeneous polymer system.

The material also has built-in redox activity, giving it color-change detection and oxidative decontamination capabilities. In order to demonstrate the applicability of Q-BTAV₆ for air-based oxidative removal reactions, studies were conducted on the catalytic oxidation of propane thiol. Thiols are the largest class of odorants present in human environments. This representative thiol is fully oxidized to the corresponding non-odorous disulfide, using only O₂ to reoxidize the reduced POM units (Figure 4). The persistent observation of a green reduced hexavanadate species suggests that reoxidation of Q-BTAV₆ by O₂ is rate-limiting under these conditions and demonstrates colorimetric detection capabilities of the polymer material. The material is red in its powder state and reddish-orange when dispersed in solvent (λₘₐₓ= 390 nm), indicative of the oxygen-to-metal charge transfer absorption manifold of a fully-oxidized [V^{V}₆O₁₃(OR)₆)]²⁻ core (R = trisBTA linkers). Upon reduction of the POM, Q-BTAV₆ becomes dark green as the peak at 390 nm decreases and a broad peak between 600 and 900 nm increases, attributed to intervalence charge-transfer bands in the reduced POM. Electrochemical studies reveal two accessible redox states corresponding to the fully chemically reversible one-electron reduced states of the hexavanadate clusters. These are likely the relevant redox states that are implicated in the catalytic cycle for the oxidation of PrSH.

## Claims

1. A polyanionic polymer comprising tetrabutylammonium hexavanadate salt polymer [(n-C₄H₉)₄N]₂ₙ[(V₆O₁₃)ₙ[((OCH₂)₃CNHCO)₃C₆H₃]ₓ[((OCH₂)₃ CNHCO)₂((HOCH₂)₃CNHCO)C₆H₃]_{y}, or lithium hexavanadate salt of the polymer, wherein the tetrabutylammonium is exchanged with Li⁺

2. The polymer of Claim 1, which is [(n-C₄H₉)₄N]₂ₙ[(V₆O₁₃)ₙ [((OCH₂)₃CNHCO)₃C₆H₃]ₓ[((OCH₂)₃CNHCO)₂((HOCH₂)₃CNHCO)C₆H₃]_{y}].

3. A composition comprising a polyanionic polymer of Claim 1 with tetrabutylammonium.

4. The composition of Claim 3, further comprising a polar aprotic solvent and/or water.

5. An article comprising a solid substrate and a composition of Claim 3.

6. The article of Claim 5, wherein the solid substrate is a piece of clothing, fabric, string, matrix, collagen, leather, paper, polymer, plastic, glass, wood, metal surface, cement, rock, or solid aggregate of minerals or mineraloids.

7. A method of oxidizing an agent comprising a thiol group, comprising exposing the composition of Claim 3 to the agent such that the agent is oxidized by the metal complexes.

8. A method of hydrolyzing an agent comprising a phosphate ester group, comprising exposing the composition of Claim 3 to the agent, such that the agent is hydrolyzed by the metal complexes.

9. The polymer material of Claim 2 having an average molecular weight of 1586 ± 33 kDa, measured by static light scattering, indicating that the polymer is comprised of roughly 1000 monomer units.

## Patentansprüche

1. Polyanionisches Polymer, umfassend Tetrabutylammoniumhexavanadatsalz-Polymer [ (n-C₄H₉)₄N]₂ₙ[(V₆O₁₃)ₙ [ ( (OCH₂)₃CNHCO)₃C₆H₃]ₓ [ ( (OCH₂)₃CNHCO)₂ ((HOCH₂)₃CNHCO) C₆H₃]_{y} oder Lithiumhexavanadatsalz des Polymers, bei dem das Tetrabutylammonium mit Li⁺ ausgetauscht ist.

2. Polymer nach Anspruch 1, das [ (n-C₄H₉)₄N]₂ₙ[ (V₆O₁₃)ₙ [ ( (OCH₂)₃CNHCO)₃C₆H₃]ₓ [ ( (OCH₂)₃CNHCO)₂((HOCH₂)₃CNHCO) C₆H₃]_{y}] ist.

3. Zusammensetzung, umfassend ein polyanionisches Polymer nach Anspruch 1 mit Tetrabutylammonium.

4. Zusammensetzung nach Anspruch 3, des Weiteren umfassend ein polar-aprotisches Lösungsmittel und/oder Wasser.

5. Artikel, umfassend ein Festkörpersubstrat und eine Zusammensetzung gemäß Anspruch 3.

6. Artikel nach Anspruch 5, wobei das Festkörpersubstrat ein Kleidungsstück, Textilmaterial, eine Schnur, Matrix, Kollagen, Leder, Papier, Polymer, Kunststoff, Glas, Holz, Metalloberfläche, Zement, Gestein oder festes Aggregat von Mineralien oder Mineraloiden ist.

7. Verfahren zum Oxidieren eines Mittels, das eine Thiolgruppe umfasst, umfassend Exponieren des Mittels der Zusammensetzung gemäß Anspruch 3, so dass das Mittel durch die Metallkomplexe oxidiert wird.

8. Verfahren zum Hydrolysieren eines Mittels, das eine Phosphatestergruppe umfasst, umfassend Exponieren des Mittels der Zusammensetzung gemäß Anspruch 3, so dass das Mittel durch die Metallkomplexe hydrolysiert wird.

9. Polymermaterial nach Anspruch 2 mit einem durchschnittlichen Molekulargewicht von 1586 ± 33 kDa, gemessen durch statische Lichtstreuung, wodurch gezeigt wird, dass das Polymer aus ungefähr 1000 Monomereinheiten zusammengesetzt ist.

## Revendications

1. Polymère polyanionique comprenant un polymère de sel d'hexavanadate de tétrabutylammonium **[(n-C₄H₉)₄N]₂ₙ [(V₆O₁₃)ₙ, [((OCH₂)₃CNHCO)₃C₆H₃]ₓ[((OCH₂)₃ CNHCO)₂((HOCH₂)₃CNHCO)C₆H₃]_{y,}** ou un sel d'hexavanadate de lithium du polymère, le tétrabutylammonium étant échangé avec Li⁺

2. Polymère selon la revendication 1, qui est **[(n-C₄H₉)₄N]₂ₙ[(V₆O₁₃)ₙ [((OCH₂)₃CNHCO)₃C₆H₃]ₓ[((OCH₂)₃CNHCO)₂((HOCH₂)₃CNHCO)C₆H₃]_{y}] .**

3. Composition comprenant un polymère polyanionique selon la revendication 1 avec tétrabutylammonium.

4. Composition selon la revendication 3, comprenant en outre un solvant aprotique polaire et/ou de l'eau.

5. Article comprenant un substrat solide et une composition selon la revendication 3.

6. Article selon la revendication 5, le substrat solide étant un élément d'habillement, de tissu, de corde, de matrice, de collagène, de cuir, de papier, de polymère, de plastique, de verre, de bois, de surface métallique, de ciment, de roche, ou d'agrégat solide de minéraux ou de minéraloïdes.

7. Procédé d'oxydation d'un agent comprenant un groupe thiol, comprenant l'exposition de la composition selon la revendication 3 à l'agent de sorte que l'agent est oxydé par les complexes métalliques.

8. Procédé d'hydrolyse d'un agent comprenant un groupe esters de phosphate, comprenant l'exposition de la composition selon la revendication 3 à l'agent, de sorte que l'agent est hydrolysé par les complexes métalliques.

9. Matériau polymérique selon la revendication 2 possédant un poids moléculaire moyen de 1 586 ± 33 kDa mesuré par diffusion statique de lumière, indiquant que le polymère est composé d'environ 1 000 motifs monomériques.
